# FASCICULE DE BREVET EUROPEEN

(11) **EP 2 655 148 B1**
(45) Date de publication et mention de la délivrance du brevet: **24.09.2014**
(21) Numéro de dépôt: 11793461.2
(22) Date de dépôt: 12.12.2011
(51) Int. Cl.: B60T 11/232, B60T 11/236, F16J 15/56

(54) **JOINT D'ETANCHEITE DE MAITRE-CYLINDRE DE SYSTEME DE FREINAGE**
DICHTUNG FÜR DEN MASTERZYLINDER EINES BREMSSYSTEMS
SEAL IN A BRAKE SYSTEM MASTER CYLINDER

(30) Priorité: 21.12.2010 FR 1005010
(43) Date de publication de la demande: 30.10.2013
(73) Titulaire: Robert Bosch GmbH, 70442 Stuttgart (DE)
(72) Inventeur: LHUILLIER, Laurent, F-93150 Le Blanc Mesnil (FR); BERNADAT, Olivier, F-94170 Le Perreux (FR); AQUINO, Serge, F-93110 Rosny Sous Bois (FR); RODRIGUEZ, Marc, F-95280 Jouy le Moutier (FR); NOBLET, Marc, F-75012 Paris (FR); GATEAU, Julien, F-92160 Antony (FR)
(86) Numéro de dépôt international: PCT/EP2011/072420
(87) Numéro de publication internationale: WO 2012/084566

(56) Documents cités:
- EP-A1- 2 080 939
- EP-A1- 2 199 164

## Description

### Domaine de l'invention

La présente invention se rapporte à un joint d'étanchéité de forme générale annulaire de maître-cylindre de système de freinage, logé dans une gorge du maître-cylindre autour du piston, joint du type comprenant une âme reliant trois lèvres sensiblement annulaires et concentriques, respectivement interne, intermédiaire et externe, munies chacune d'une extrémité libre et d'une extrémité de liaison avec l'âme, au moins une partie de l'extrémité libre de la lèvre intermédiaire faisant saillie axialement par rapport aux extrémités libres des lèvres interne et externe, la lèvre intermédiaire est interrompue dans sa périphérie de façon à comporter plusieurs portions espacées circonférentiellement formant des appuis et des passages avec la paroi opposée à celle contre laquelle s'appuie la surface de l'âme.

### Etat de la technique

Il existe des joints d'étanchéité, notamment décrits dans le document EP 2080 939 encore appelé joint de réalimentation du type défini ci-dessus, mais dans certaines conditions, il est difficile de purger le maître-cylindre ou du moins de le purger efficacement et complètement.

### But de l'invention

La présente invention a pour but de développer un joint d'étanchéité encore appelé joint de réalimentation de maître-cylindre de système de frein facilitant la purge du système de frein avant le remplissage de celui-ci avec le liquide de frein et constituant un élément d'étanchéité supplémentaire pour les pressions de l'ordre de 1 à 3 bars.

### Exposé et avantages de l'invention

A cet effet, l'invention a pour objet un joint d'étanchéité du type défini ci-dessus, caractérisé en ce que,
la surface de l'âme comprend :
- un plateau périphérique,
- une couronne extérieure en relief, bordant extérieurement le plateau et ayant:
   * au moins une zone de liaison ouverte et déformable sous l'effet de la pression intérieure du joint pour reformer la continuité de la couronne extérieure,
- un talon au-delà de la couronne et dans le prolongement de chaque interruption formée par la zone de liaison de la couronne,
- au moins un canal réalisé dans le plateau et issu du bord intérieur non débouchant à l'extérieur arrêté avant la zone de liaison de la couronne.

Un canal non débouchant à l'extérieur de la surface de l'âme du joint est suffisant pour constituer un passage pour purger efficacement le système de frein lors de sa mise en service. Cela permet également de réaliser une surface d'étanchéité complémentaire pour certaines pressions, notamment des pressions comprises entre 1 et 3 bars.

Suivant une caractéristique avantageuse, le canal s'arrête pratiquement à l'alignement de la couronne extérieure de sorte que l'étanchéité lors de la mise en pression de la chambre de pression, se fait par la déformation de la zone de liaison de la couronne extérieure. Cette zone de liaison déborde de part et d'autre du prolongement de la couronne intérieure et assure ainsi l'étanchéité.

Suivant une autre caractéristique avantageuse, le plateau s'arrête avant la couronne extérieure et forme avec la couronne extérieure, un couloir constituant une chambre d'étanchéité supplémentaire en particulier si la zone de liaison est constituée par une cavité réalisée dans la couronne extérieure.

Suivant une autre caractéristique, la zone de liaison est constituée par la suppression de la couronne extérieure sur une certaine longueur périphérique. La matière de l'âme au niveau de cette zone de liaison, pourra ainsi se déformer sous l'effet de la pression intérieure du joint pour constituer une zone d'étanchéité dans le prolongement de la couronne extérieure et de part et d'autre de celle-ci au niveau de la zone de liaison.

Suivant une autre caractéristique avantageuse, le plateau périphérique est séparé de la couronne extérieure par un couloir au même niveau que le canal et le bord intérieur. Comme indiqué ci-dessus, ce couloir notamment dans le cas où la couronne extérieure comporte une zone de liaison constituée par une cavité, pourra former une chambre intermédiaire favorisant d'une part la déformation de la zone de liaison sous l'effet de la pression intérieure et constituant d'autre part une chambre d'étanchéité.

Le canal réalisé dans le plateau périphérique, est de préférence dirigé radialement. Ce canal peut être unique ou plusieurs canaux peuvent être prévus dans le plateau périphérique.

L'invention concerne également un maître-cylindre de système de freinage comportant un corps avec une chambre de pression recevant un piston, l'alésage de la chambre de pression ayant une gorge recevant un joint assurant l'étanchéité du piston dans le corps du maître-cylindre, la gorge séparant la chambre de pression d'une chambre d'alimentation reliée au canal d'alimentation de liquide hydraulique,
caractérisé en ce que
la gorge reçoit un joint de réalimentation de forme générale annulaire ayant une âme reliant trois lèvres sensiblement annulaires et concentriques (axe x-x du maître-cylindre) respectivement interne, intermédiaire et externe, munies chacune d'une extrémité libre et d'une extrémité de liaison avec l'âme, au moins une partie de l'extrémité libre de la lèvre intermédiaire faisant saillie axialement (direction x-x) par rapport aux extrémités libres des lèvres interne et externe, la lèvre intermédiaire étant interrompue en circonférence de façon à comporter plusieurs portions espacées dans la direction périphérique, formant des appuis et des passages avec la paroi opposée à la paroi contre laquelle s'appuie la surface de l'âme,
la surface de l'âme comprenant :
- un plateau périphérique,
- une couronne extérieure en relief, bordant extérieurement le plateau, la couronne extérieure ayant une zone de liaison déformable sous l'effet de la pression intérieure au joint pour reformer la continuité de la couronne extérieure,
- un talon au-delà de la couronne et dans le prolongement de chaque interruption formée dans la couronne par la zone de liaison,
- au moins un canal issu du bord intérieur, non débouchant à l'extérieur, arrêté avant la zone de liaison de la couronne extérieure.

Suivant une autre caractéristique avantageuse le maître-cylindre est un maître-cylindre simple avec un piston et une gorge recevant un joint de réalimentation ou un maître-cylindre tandem avec un piston principal et un piston auxiliaire coopérant chacun avec un joint de réalimentation logé dans une gorge du corps du maître-cylindre.

### Dessins

La présente invention sera décrite ci-après de manière plus détaillée à l'aide de modes de réalisation d'un joint d'étanchéité de maître-cylindre de système de freinage représenté dans les dessins annexés dans lesquels :
- la figure 1 est une vue en coupe axiale partielle d'un maître-cylindre de système de freinage selon l'invention au niveau d'un joint.
- la figure 2 est une vue en perspective du joint de la figure 1,
- les figures 3A, 3B montrent respectivement et de manière très schématique les appuis d'étanchéité entre le joint, la gorge dans le corps du maître-cylindre et le piston, en l'absence de pression (figure 3A) et en cas de forte pression (figure 3B),
- la figure 4 est une section du joint selon l'invention,
- la figure 5 est une vue en perspective d'une partie de la face arrière de l'âme du joint de la figure 4 avec un premier mode de réalisation des moyens d'étanchéité,
- la figure 5A est une vue développée droite d'une partie de la surface de l'âme du joint,
- la figure 5B est une vue de côté correspondant à la figure 5A montrant les différents reliefs de la face de l'âme,
- la figure 5C est une vue analogue à celle de la figure 4A mettant en évidence la zone déformable de la face de l'âme,
- la figure 6 est une vue en perspective partielle de la face arrière de l'âme du joint montrant un second mode de réalisation des moyens d'étanchéité,
- la figure 6A est une vue développée droite d'une partie de la surface de l'âme montrant un second mode de réalisation des moyens d'étanchéité,
- la figure 6B est une vue de côté correspondant à la figure 6A et mettant en évidence le relief des différentes parties de la surface de l'âme.

### Description de modes de réalisation préférentiels de l'invention

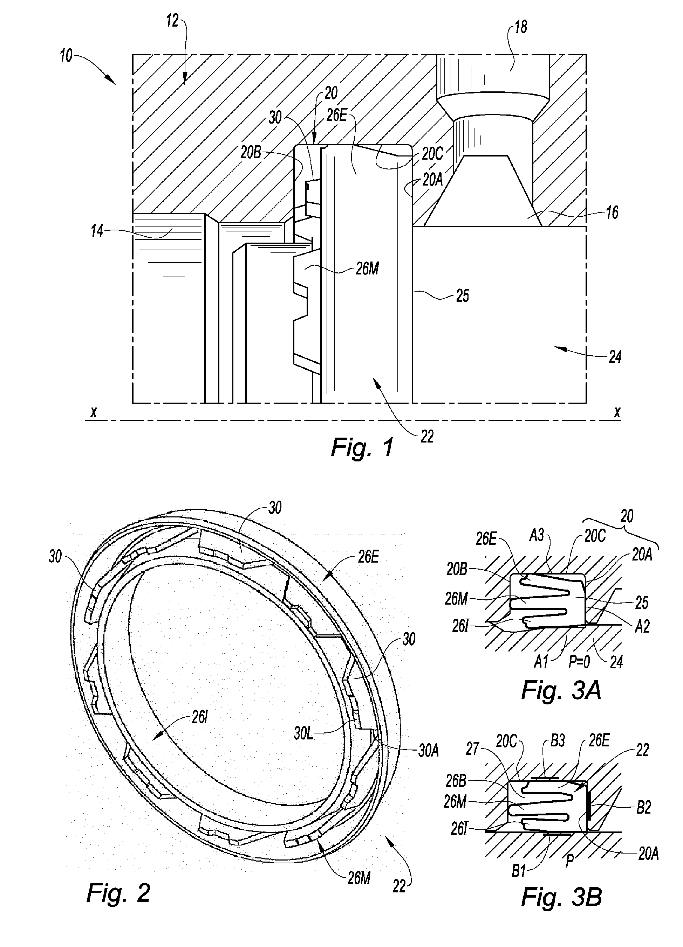

Selon la figure 1, l'invention a pour objet un joint d'étanchéité 22 encore appelé joint de réalimentation pour un maître-cylindre 10 d'un système de freinage. Le corps 12 du maître-cylindre 10 délimite une chambre de pression 14 et une chambre d'alimentation en liquide de frein 16, elle-même reliée à un canal d'alimentation 18. Le corps 12 comporte une gorge interne 20, annulaire, avec un fond 20C et deux faces opposées 20A, 20B. Cette gorge 20 reçoit un joint d'étanchéité 22 coopérant avec le piston 24 pour séparer les chambres 14 et 16. Le piston 24 est mobile entre une position de repos dans laquelle les chambres 14 et 16 communiquent et une position active, lorsque le piston 24 est actionné par la pédale de frein (déplacement vers la gauche selon la figure 1) pour transmettre les efforts de freinage. A ce moment, les chambres 14 et 16 sont séparées.

Le joint 22 (figures 1 et 2) se compose d'une âme 25 portant une lèvre extérieure 26E, une lèvre intérieure 26I et une lèvre intermédiaire 26M. La lèvre intermédiaire 26M comporte des parties en relief séparées par des intervalles. La lèvre intermédiaire 26M est destinée à s'appliquer contre la face 20B pour tenir le joint 22 par ailleurs appliqué de manière étanche par sa lèvre intérieure 26I contre le piston 24.

Le passage du liquide de frein de la chambre d'alimentation 16 à la chambre de pression 14, se fait en contournant le joint 22 relié de manière étanche au piston 24. Ce contournement se fait entre l'âme 25 et la face 20A de la gorge 20, puis entre la lèvre extérieure 26E et le fond 20C de la gorge, puis dans les intervalles des parties en relief 30 de la lèvre intermédiaire 26M puisque ni la lèvre extérieure 26E, ni la lèvre intérieure 26I, ne sont en appui étanche dans la gorge 20.

Les figures 3A, 3B montrent respectivement l'état du joint 22 en l'absence de pression (figure 3A) et lorsqu'une pression est appliquée dans la chambre de pression 14 (figure 3B).

Selon la figure 3A, en l'absence de pression sur le joint 22, celui-ci est appliqué contre le piston 24 par sa lèvre intérieure 26I réalisant un appui étanche en pression de niveau faible sur la zone A1 du piston 24 grâce à la forme particulière, tronconique du piston 24 à cet endroit. Cette faible pression permet le passage de liquide de frein pour la régulation ESP. L'âme 25 n'est que faiblement appuyée contre le côté 20A de la gorge 20 comme cela est schématisé par le point A2. Il en est de même de la lèvre extérieure 26E qui ne touche que faiblement le fond 20C de la gorge 20 (point A3). Comme déjà indiqué, le côté 20B de la gorge 20 n'est pas concerné par l'étanchéité mais sert simplement d'appui à la lèvre médiane 26M.

Selon la figure 3B, lorsqu'une pression est engendrée par exemple par le piston 24 dans la chambre de pression 14, cette pression s'exerce dans la cavité 27 du joint 22 et crée une zone d'étanchéité importante B1 avec le piston 24 et aussi une zone d'étanchéité B2, étalée sur pratiquement la première face 20A de la gorge 20 recevant la face de l'âme 25. L'étanchéité se fait également au niveau de la lèvre extérieure 26E venant contre le fond 20C de la gorge 20. Cette étanchéité est réalisée grâce à la structure particulière de la surface de l'âme 25 selon l'invention.

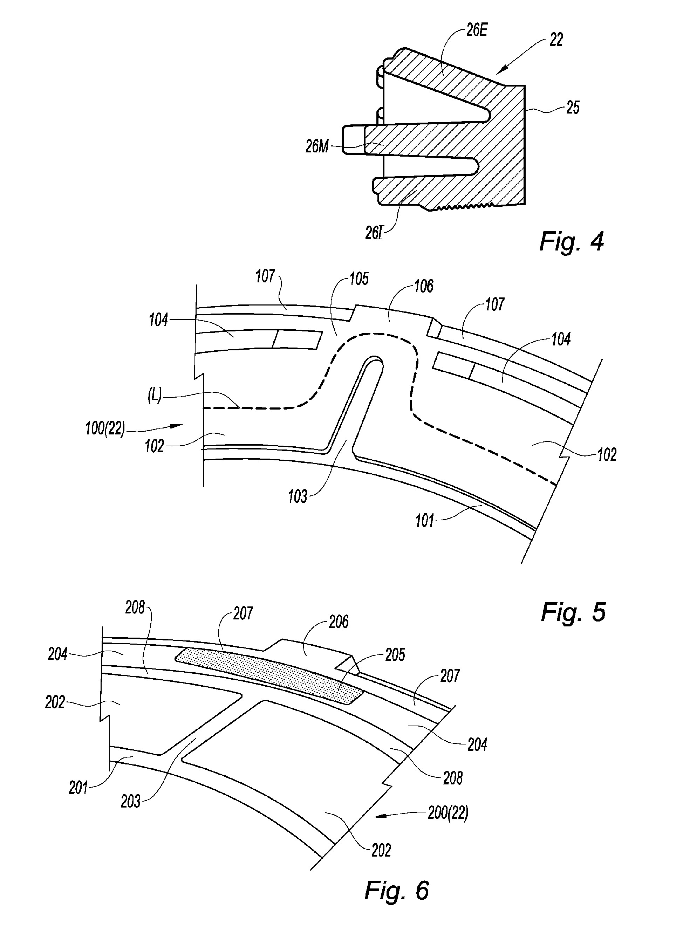

La figure 4 montre la section de la forme de révolution du joint 22 à l'état non encastré dans la gorge 20, laissant apparaître la forme de l'âme 25, la forme de la branche extérieure 26E munie de plots, la forme de la lèvre intermédiaire 26M avec ses parties en relief et en creux, servant d'appui contre la paroi 20B de la gorge 20 et permettant le passage du liquide de frein.

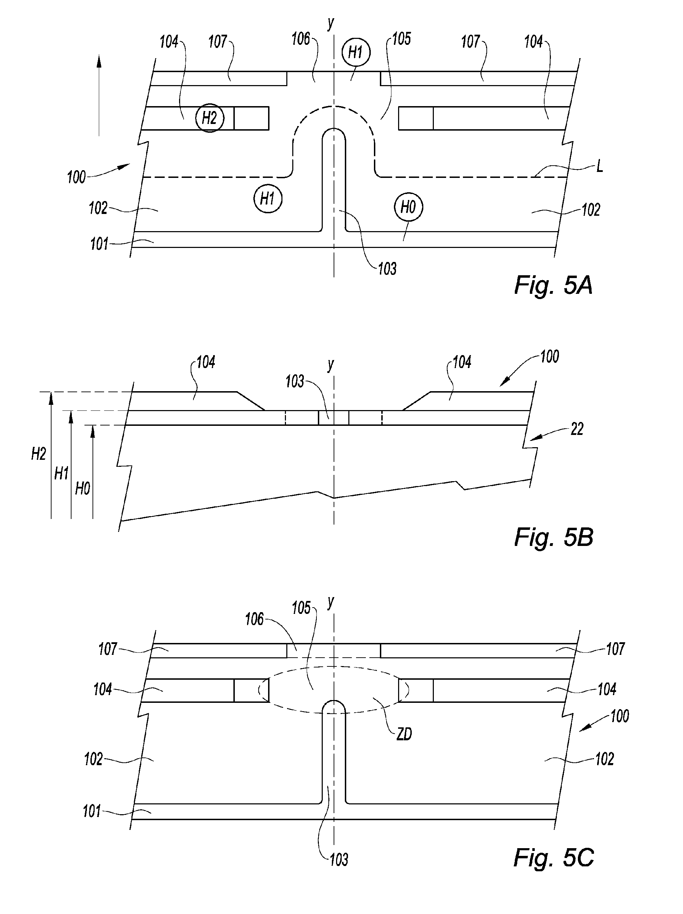

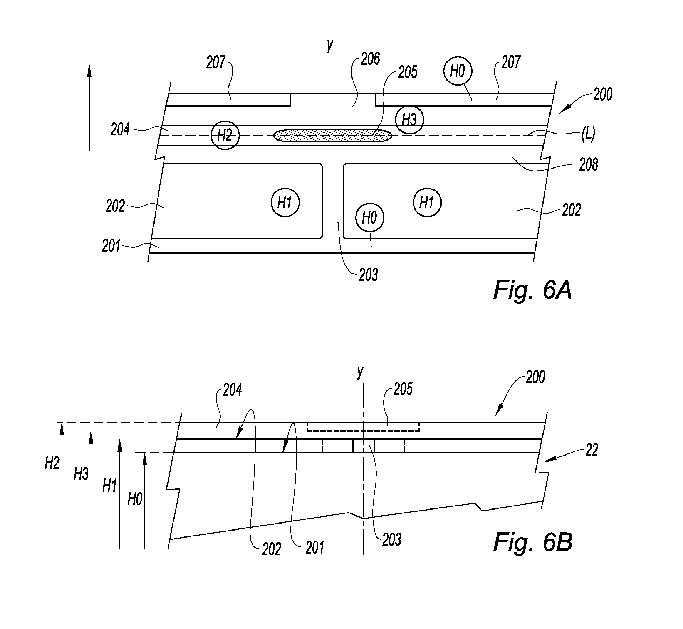

Deux modes de réalisation de la surface de l'âme 25 du joint 22 seront décrits ci-après à l'aide des figures 5 et 6. Ces surfaces portent respectivement les références 100 et 200 et les éléments analogues ou équivalents porteront des références analogues dans les séries de 100 et de 200.

La figure 5 montre une partie d'un premier mode de réalisation de la surface 100 de l'âme 25 du joint qui correspond à un motif en relief et à un motif en creux répartis à la périphérie de l'âme 25 suivant une répartition régulière, voire suivant un motif unique.

La surface 100 se compose d'un plateau 102 en relief par rapport au bord périphérique intérieur 101. Le plateau 102 est traversé par un canal 103 non débouchant, issu du bord intérieur 102 et bouché à son extrémité tournée vers l'extérieur. Le plateau 102 est surmonté par une couronne extérieure 104 discontinue, avec un intervalle d'interruption 105 dans la direction du canal 103. L'intervalle d'interruption 105 ferme une zone de liaison 105 qui, par déformation sous pression comme cela sera décrit ensuite, assure l'étanchéité sous l'effet de la pression. Au-delà de cette zone de liaison 105, un talon 106 occupe sensiblement la largeur de l'intervalle. Le talon 106 est bordé par un bord extérieur 107. La direction du canal 103 est de préférence radiale sans que cette direction ne s'impose impérativement. Elle peut également être inclinée par rapport à la direction radiale du joint.

La forme du motif de la surface 100 apparaît en vue en plan à la figure 5A qui est un développement droit de la forme circulaire. La figure 5B est une vue de côté du développement droit correspondant à la figure 5A et montrant les différents niveaux des éléments composant la surface 100.

La figure 5B met en évidence la relation entre les différents niveaux dans la direction radiale par rapport à une origine non précisée: la hauteur H0 du bord intérieur 101, la hauteur H1 du plateau 102 et la hauteur H2 de la couronne interrompue 104. Le canal a un fond à la hauteur H0. Dans cette vue, le talon 106 a la même hauteur H1 que le plateau 102.

Les figures 5 et 5A montrent par un trait interrompu la ligne d'étanchéité (L) de ce joint 100 lorsqu'il est appliqué contre la face 20A de la gorge 20 (figure 1). L'étanchéité est réalisée par la déformation sous pression de l'intérieur du joint 100. La déformation concerne la zone ZD tracée à la figure 5C qui, sous l'effet de la pression, vient en relief et plaque la surface du plateau 102 dans l'intervalle d'interruption ou zone de liaison 105 contre la face 20A de la gorge 20. Le talon 106 sert à soutenir cet effort de déformation et constitue une surface d'étanchéité supplémentaire lorsque le talon 106 est appliqué contre le côté 20A.

Les figures 6, 6A, 6B, montrent un second mode de réalisation de la surface 200 de l'âme 25 du joint 22. La surface 200, se compose d'un motif constitué d'un plateau 202, au-delà du bord intérieur 201. Le plateau 201 est divisé par un canal 203 à la hauteur du bord intérieur 201. Le canal 203 débouche au-delà du plateau 202 dans la direction périphérique extérieure, dans un couloir périphérique 208.

Au-delà du couloir bordant le plateau 202, il y a une couronne 204 extérieure, munie d'une cavité 205 barrant le prolongement du canal 203 et constituant une zone de liaison. Au-delà de la cavité 205, il y a le talon 206 avec de part et d'autre le bord extérieur 207. Le talon 206 est aussi situé dans le prolongement du canal 203, en s'étalant de part et d'autre de ce prolongement et en occupant une fraction importante de la longueur périphérique de la cavité 205.

Sous l'effet de la pression exercée à l'intérieur du joint 22, la cavité 205 se déforme vers l'extérieur et ferme le passage qu'elle constitue en l'absence de pression. L'étanchéité est ainsi assurée au niveau de la couronne extérieure 204 et de la surface de la cavité 205 mise au niveau de la surface extérieure de la couronne 204, c'est-à-dire de la zone de liaison 205.

L'invention concerne la réalisation d'un maitre-cylindre simple ou maitre-cylindre tandem tel que celui représenté partiellement à la figure 1. Un tel maître-cylindre comporte un piston unique 24 ou un piston primaire et un piston auxiliaire, et l'étanchéité entre la chambre de pression 14 et la chambre d'alimentation 16 avec le canal d'alimentation 18, est assurée par un joint de réalimentation 22 dont l'âme a une surface d'étanchéité 100, 200 telle que celles décrites ci-dessus.

### NOMENCLATURE DES ELEMENTS PRINCIPAUX

- 10: maître-cylindre
- 12: corps de maître cylindre
- 14: chambre de pression
- 18: canal d'alimentation
- 20: gorge interne
- 20A: face
- 20B: face
- 20C: fond
- 22: joint
- 24: piston
- 25: âme
- 26E: lèvre extérieure
- 26I: lèvre intérieure
- 26M: lèvre intermédiaire
- 261E: plot
- 30: partie en relief
- 100: surface de l'âme
- 101: bord intérieur
- 102: plateau périphérique
- 103: canal
- 104: couronne extérieure
- 105: zone de liaison / intervalle
- 106: talon
- 107: bord extérieur
- 200: surface de l'âme
- 201: bord intérieur
- 202: plateau périphérique
- 203: canal
- 204: couronne extérieure
- 205: zone de liaison / cavité
- 206: talon
- 207: bord extérieur
- 208: couloir

## Revendications

1. Joint d'étanchéité de forme générale annulaire de maître-cylindre de système de freinage, logé dans une gorge (20) du maître-cylindre autour du piston (24), joint du type comprenant une âme (25) reliant trois lèvres sensiblement annulaires et concentriques, respectivement intérieure (26I), intermédiaire (26M) et extérieure (26E), munies chacune d'une extrémité libre et d'une extrémité de liaison avec l'âme (25), au moins une partie de l'extrémité libre de la lèvre intermédiaire (26M) faisant saillie axialement par rapport aux extrémités libres des lèvres intérieures (26I) et extérieures (26E), la lèvre intérieure (26I) est interrompue dans sa périphérie de façon à comporter plusieurs portions espacées circonférentiellement formant des appuis et des passages avec la paroi (20B) opposée à celle (20A) contre laquelle s'appuie la surface de l'âme (25),
**caractérisé en ce que**
la surface (100, 200) de l'âme (25) comprend :
- un plateau périphérique (102, 202),
- une couronne extérieure (104, 204) en relief, bordant extérieurement le plateau (102, 202) et ayant:
* au moins une zone de liaison (105, 205) ouverte et déformable sous l'effet de la pression intérieure du joint (22) pour reformer la continuité de la couronne extérieure (104, 204),
- un talon (106, 206) au-delà de la couronne (104, 204) et dans le prolongement de chaque interruption formée par la zone de liaison (105, 205) de la couronne,
- au moins un canal (103, 203) réalisé dans le plateau (102, 202) et issu du bord intérieur (101, 201) non débouchant à l'extérieur arrêté avant la zone de liaison (105, 205) de la couronne (104, 204).

2. Joint d'étanchéité selon la revendication 1,
**caractérisé en ce que**
le canal (102) s'arrête pratiquement à l'alignement de la couronne extérieure (104).

3. Joint d'étanchéité selon la revendication 1,
**caractérisé en ce que**
le plateau (202) s'arrête avant la couronne extérieure (204).

4. Joint d'étanchéité selon la revendication 1,
**caractérisé en ce que**
la zone de liaison (105) est une suppression de la couronne extérieure (104).

5. Joint d'étanchéité selon la revendication 1,
**caractérisé en ce que**
la zone de liaison (205) est une cavité dans la couronne extérieure (204).

6. Joint d'étanchéité selon la revendication 1,
**caractérisé en ce que**
le plateau périphérique (202) est séparé de la couronne extérieure (204) par un couloir (208) du même niveau que le canal (203) et le bord intérieur (201).

7. Joint d'étanchéité selon la revendication 1,
**caractérisé en ce que**
le canal (103, 203) est dirigé radialement.

8. Maître-cylindre de système de freinage (10) comportant un corps (12) avec une chambre de pression (14) recevant un piston (24), l'alésage de la chambre de pression ayant une gorge (20) recevant un joint (22) assurant l'étanchéité du piston (24) dans le corps (12) du maître-cylindre (10), la gorge (20) séparant la chambre de pression (14) d'une chambre d'alimentation (16) reliée au canal d'alimentation (18) de liquide hydraulique, **caractérisé en ce que**
la gorge reçoit un joint d'étanchéité (22) de forme générale annulaire ayant une âme (25) reliant trois lèvres sensiblement annulaires et concentriques (axe x-x du maître-cylindre) respectivement interne (26I), intermédiaire (26M) et externe (26E), munies chacune d'une extrémité libre et d'une extrémité de liaison avec l'âme (25), au moins une partie de l'extrémité libre de la lèvre intermédiaire (26M) faisant saillie axialement (direction x-x) par rapport aux extrémités libres des lèvres interne (26I) et externe (26E), la lèvre intermédiaire (26M) étant interrompue en circonférence de façon à comporter plusieurs portions espacées dans la direction périphérique, formant des appuis et des passages avec la paroi (20B) opposée à la paroi (20A) contre laquelle s'appuie la surface de l'âme (25),
la surface (100, 200) de l'âme (25) comprenant:
- un plateau périphérique (102, 202),
- une couronne extérieure (104, 204) en relief, bordant extérieurement le plateau (102, 202), la couronne extérieure ayant une zone de liaison (105, 205) déformable sous l'effet de la pression intérieure au joint (22) pour reformer la continuité de la couronne extérieure (104, 204),
- un talon (106, 206) au-delà de la couronne (104, 204) et dans le prolongement de chaque interruption formée dans la couronne par la zone de liaison (105, 205),
- au moins un canal (103, 203) issu du bord intérieur (101, 201), non débouchant à l'extérieur, arrêté avant la zone de liaison (105, 205) de la couronne extérieure (104, 204).

9. Maître-cylindre de système de freinage selon la revendication 8,
**caractérisé en ce qu'**
il est un maître-cylindre simple avec un piston et une gorge (20) recevant un joint de réalimentation (22) ou un maître-cylindre tandem avec un piston principal et un piston auxiliaire coopérant chacun avec un joint de réalimentation (22) logé dans une gorge (20) du corps (12) du maître-cylindre (10).

## Patentansprüche

1. Allgemein ringförmige Dichtung eines Bremssystem-Hauptbremszylinders, die in einer Rille (20) des Hauptbremszylinders um den Kolben (24) herum untergebracht ist, wobei die Dichtung von der Art ist, die einen Mittelteil (25) enthält, der drei im Wesentlichen ringförmige und konzentrische Lippen, eine innere (26I), eine zwischenliegende (26M) und eine äußere (26E), verbindet, die je mit einem freien Ende und mit einem Verbindungsende mit dem Mittelteil (25) versehen sind, wobei mindestens ein Teil des freien Endes der Zwischenlippe (26M) axial bezüglich der freien Enden der inneren (26I) und äußeren (26E) Lippen vorsteht, wobei die innere Lippe (26I) in ihrem Umfang unterbrochen ist, um mehrere in Umfangsrichtung beabstandete Abschnitte aufzuweisen, die Auflagen und Durchgänge mit der Wand (20B) bilden, die derjenigen (20A) gegenüberliegt, gegen die die Fläche des Mittelteils (25) anliegt,
**dadurch gekennzeichnet, dass** die Fläche (100, 200) des Mittelteils (25) enthält:
- eine Umfangsplatte (102, 202),
- einen erhöhten äußeren Kranz (104, 204), der außen die Platte (102, 202) umrandet und hat:
* mindestens eine offene und unter der Wirkung des Innendrucks der Dichtung (22) verformbare Verbindungszone (105, 205), um die Kontinuität des äußeren Kranzes (104, 204) umzuformen,
- einen Absatz (106, 206) jenseits des Kranzes (104, 204) und in der Verlängerung jeder durch die Verbindungszone (105, 205) des Kranzes geformten Unterbrechung,
- mindestens einen Kanal (103, 203), der in der Platte (102, 202) ausgebildet ist und vom Innenrand (101, 201) stammt, der nicht nach außen mündet und vor der Verbindungszone (105, 205) des Kranzes (104, 204) endet.

2. Dichtung nach Anspruch 1, **dadurch gekennzeichnet, dass** der Kanal (103) praktisch fluchtend zum äußeren Kranz (104) endet.

3. Dichtung nach Anspruch 1, **dadurch gekennzeichnet, dass** die Platte (202) vor dem äußeren Kranz (204) endet.

4. Dichtung nach Anspruch 1, **dadurch gekennzeichnet, dass** die Verbindungszone (105) eine Aufhebung des äußeren Kranzes (104) ist.

5. Dichtung nach Anspruch 1, **dadurch gekennzeichnet, dass** die Verbindungszone (205) ein Aushöhlung im äußeren Kranz (204) ist.

6. Dichtung nach Anspruch 1, **dadurch gekennzeichnet, dass** die Umfangsplatte (202) vom äußeren Kranz (204) durch eine Rinne (208) auf gleicher Höhe wie der Kanal (203) und der Innenrand (201) getrennt ist.

7. Dichtung nach Anspruch 1, **dadurch gekennzeichnet, dass** der Kanal (103, 203) radial ausgerichtet ist.

8. Bremssystem-Hauptbremszylinder (10), der einen Körper (12) mit einer Druckkammer (14) aufweist, die einen Kolben (24) aufnimmt, wobei die Bohrung der Druckkammer eine Rille (20) hat, die eine Dichtung (22) aufnimmt, welche die Dichtheit des Kolbens (24) im Körper (12) des Hauptbremszylinders (10) gewährleistet, wobei die Rille (20) die Druckkammer (14) von einer Versorgungskammer (16) trennt, die mit dem Versorgungskanal (18) mit Hydraulikflüssigkeit verbunden ist,
**dadurch gekennzeichnet, dass** die Rille eine allgemein ringförmige Dichtung (22) aufnimmt, die einen Mittelteil (25) hat, der drei im Wesentlichen ringförmige und konzentrische Lippen (Achse x-x des Hauptbremszylinders), eine innere (26I), eine zwischenliegende (26M), bzw. eine äußere (26E), verbindet, die je mit einem freien Ende und mit einem Verbindungsende mit dem Mittelteil (25) versehen sind, wobei mindestens ein Teil des freien Endes der Zwischenlippe (26M) axial (Richtung x-x) bezüglich der freien Enden der inneren (26I) und äußeren (26E) Lippe vorsteht, wobei die Zwischenlippe (26M) am Umfang unterbrochen ist, um mehrere in Umfangsrichtung beabstandete Abschnitte aufzuweisen, die Auflagen und Durchgänge mit der Wand (20B) gegenüber der Wand (20A) formen, gegen die die Fläche des Mittelteils (25) sich anlegt, wobei die Fläche (100, 200) des Mittelteils (25) enthält:
- eine Umfangsplatte (102, 202),
- einen hochstehenden äußeren Kranz (104, 204), der die Platte (102, 202) außen umrandet, wobei der äußere Kranz eine unter der Wirkung des Innendrucks der Dichtung (22) verformbare Verbindungszone (105, 205) hat, um die Kontinuität des äußeren Kranzes (104, 204) umzuformen,
- einen Absatz (106, 206) jenseits des Kranzes (104, 204) und in der Verlängerung jeder Unterbrechung, die im Kranz durch die Verbindungszone (105, 205) geformt wird,
- mindestens einen Kanal (103, 203), der von dem Innenrand (101, 201) stammt, nicht nach außen mündet, vor der Verbindungszone (105, 205) des Kranzes (104, 204) endet.

9. Bremssystem-Hauptbremszylinder nach Anspruch 8, **dadurch gekennzeichnet, dass** es ein einfacher Hauptbremszylinder mit einem Kolben und einer Rille (20), die eine Wiederauffülldichtung (22) aufnimmt, oder ein Tandem-Hauptbremszylinder mit einem Hauptkolben und einem Hilfskolben ist, die je mit einer Wiederauffülldichtung (22) zusammenwirken, die in einer Rille (20) des Körpers (12) des Hauptbremszylinders (10) untergebracht ist.

## Claims

1. Seal of annular general shape for a brake system master cylinder, which seal is housed in a groove (20) in the master cylinder around the piston (24), the seal being of the type comprising a core (25) connecting three substantially annular and concentric lips, an inner lip (26I), an intermediate lip (26M) and an outer lip (26E) respectively, each lip being provided with a free end and with an end for connecting with the core (25), at least part of the free end of the intermediate lip (26M) projecting axially with respect to the free ends of the inner (26I) and outer (26E) lips, the inner lip (26I) being interrupted in its periphery so as to comprise a plurality of circumferentially spaced portions forming supports and passages with the wall (20B) opposite to the wall (20A) against which the surface of the core (25) bears,
**characterized in that**
the surface (100, 200) of the core (25) comprises:
- a peripheral plate (102, 202),
- an outer crown (104, 204) in relief, externally bordering the plate (102, 202) and having:
* at least one open connection zone (105, 205) deformable under the effect of the internal pressure of the seal (22) in order to reform the continuity of the outer crown (104, 204),
- a heel (106, 206) beyond the crown (104, 204) and in the continuation of each interruption formed by the connection zone (105, 205) of the crown,
- at least one channel (103, 203) made in the plate (102, 202) and emanating from the inner edge (101, 201), which channel does not open out to the outside and stops before the connection zone (105, 205) of the crown (104, 204).

2. Seal according to Claim 1,
**characterized in that**
the channel (103) stops virtually in alignment with the outer crown (104).

3. Seal according to Claim 1,
**characterized in that**
the plate (202) stops before the outer crown (204).

4. Seal according to Claim 1,
**characterized in that**
the connection zone (105) is a suppression of the outer crown (104).

5. Seal according to Claim 1,
**characterized in that**
the connection zone (205) is a cavity in the outer crown (204).

6. Seal according to Claim 1,
**characterized in that**
the peripheral plate (202) is separated from the outer crown (204) by a passage (208) of the same level as the channel (203) and the inner edge (201).

7. Seal according to Claim 1,
**characterized in that**
the channel (103, 203) is directed radially.

8. Brake system master cylinder (10) comprising a body (12) with a pressure chamber (14) receiving a piston (24), the bore of the pressure chamber having a groove (20) receiving a seal (22) which provides sealing for the piston (24) in the body (12) of the master cylinder (10), the groove (20) separating the pressure chamber (14) from a supply chamber (16) connected to the hydraulic fluid supply channel (18), **characterized in that**
the groove receives a seal (22) of annular general shape having a core (25) connecting three substantially annular and concentric lips (axis x-x of the master cylinder), an internal lip (26I), an intermediate lip (26M) and an external lip (26E) respectively, each lip being provided with a free end and with an end for connecting with the core (25), at least part of the free end of the intermediate lip (26M) projecting axially (direction x-x) with respect to the free ends of the internal (26I) and external (26E) lips, the intermediate lip (26M) being interrupted in its circumference so as to comprise a plurality of spaced portions in the peripheral direction, forming supports and passages with the wall (20B) opposite to the wall (20A) against which the surface of the core (25) bears, the surface (100, 200) of the core (25) comprising:
- a peripheral plate (102, 202),
- an outer crown (104, 204) in relief, externally bordering the plate (102, 202), the outer crown having a connection zone (105, 205) deformable under the effect of the pressure inside the seal (22) in order to reform the continuity of the outer crown (104, 204),
- a heel (106, 206) beyond the crown (104, 204) and in the continuation of each interruption formed in the crown by the connection zone (105, 205),
- at least one channel (103, 203) emanating from the inner edge (101, 201), which channel does not open out to the outside and stops before the connection zone (105, 205) of the outer crown (104, 204).

9. Brake system master cylinder according to Claim 8, **characterized in that**
it is a single master cylinder with a piston and a groove (20) receiving a resupply seal (22) or a tandem master cylinder with a main piston and an auxiliary piston each cooperating with a resupply seal (22) housed in a groove (20) in the body (12) of the master cylinder (10).
